(19) Europäisches Patentamt
European Patent Office
Office européen des brevets

(11) EP 3 649 192 B1

(12) EUROPEAN PATENT SPECIFICATION

(45) Date of publication and mention of the grant of the patent:
**22.11.2023 Bulletin 2023/47**

(21) Application number: **18731461.2**

(22) Date of filing: **20.06.2018**

(51) International Patent Classification (IPC):
***C08L 23/08*** *(2006.01)*

(52) Cooperative Patent Classification (CPC):
(C-Sets available)
**C08L 23/0815;** C08L 2203/12 (Cont.)

(86) International application number:
**PCT/EP2018/066391**

(87) International publication number:
**WO 2019/007684 (10.01.2019 Gazette 2019/02)**

# (54) POLYOLEFIN COMPOSITON FOR FIBERS

POLYOLEFINZUSAMMENSETZUNG FÜR FASERN

COMPOSITION DE POLYOLÉFINE POUR FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2017 EP 17180217**

(43) Date of publication of application:
**13.05.2020 Bulletin 2020/20**

(73) Proprietor: **Basell Poliolefine Italia S.r.l.**
**20121 Milano (IT)**

(72) Inventors:
- **GALVAN, Monica**
  **44122 Ferrara (IT)**
- **CAVALIERI, Claudio**
  **44122 Ferrara (IT)**
- **MARTI PORQUERES, Jaume**
  **43206 Reus (ES)**
- **LEMAIRE, Renaud**
  **1090 Brussels (BE)**
- **DE PALO, Roberto**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 676 972**

EP 3 649 192 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0815, C08L 23/0815, C08L 23/10, C08L 2205/025, C08L 2205/03**

## Description

FIELD OF THE INVENTION

The present disclosure relates to fibers comprising a polyolefin composition comprising beneficial embodiments such as high softness.

BACKGROUND OF THE INVENTION

Polyolefin fibers and in particular polypropylene fibers are well known in the art to produce non-woven fabric.
WO 94/009193 relates to a Polymeric composition to produce polypropylene fibers which comprises polypropylene homopolymer of the type used to produce heat sealable fibers and a modifying polymeric composition comprising:

A) from 10 to 60% by weight of a propylene polymer having isotacticity index (weight percentage of fraction insoluble in boiling n-heptane) higher than 80,
B) from 3 to 25% by weight of an ethylene-propylene copolymer insoluble in xylene at 23° C, and
C) from 15 to 87% by weight of a propylene copolymer insoluble in xylene at 23° C, said modifying polymeric composition having a concentration lower than 20% by weight of the total.

This composition has been used in order to increase softness and toughness of the non-woven fabric
There is however a need in the art to provide polyolefin composition to be used as modifier in order to increase the balance of properties in a fiber especially in term of tenacity, elongation at break and softness.

SUMMARY OF THE INVENTION

The applicant found that a composition comprising propylene-base polymers and linear low-density polyethylene (LLDPE) can be used as soft modifier in a polyolefin composition for fibers. This soft modifier can be used in small amount for increasing the softness of the resulting fibers by keeping tenacity and the elongation substantially unchanged.
Thus, the present disclosure is directed to a polyolefinic fiber comprising from 2 wt% to 20 wt% relative to the total weight of the fiber of a polyolefin composition comprising:

A) 5-35% by weight of a propylene homopolymer or a propylene ethylene copolymer containing 90% by weight or more of propylene units; component A) containing 10% by weight or less of a fraction soluble in xylene at 25°C (XSa), both the amount of propylene units and of the fraction $XS_A$ being referred to the weight of A);
B) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C ($XS_B$), both the amount of alpha-olefin units and of the fraction $XS_B$ being referred to the weight of (B); and
C) 30-60% by weight of a copolymer of ethylene and propylene containing from 25% to 75% by weight of ethylene units and containing from 40% to 95% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100.

DETAILED DESCRIPTION OF THE INVENTION

Thus, the present disclosure is directed to polyolefinic fiber comprising from 2 wt% to 20 wt% relative to the total weight of the fiber of a polyolefin composition comprising:

A) 5-35% by weight; preferably 10-30 % by weight; more preferably 15-23%by weight of a propylene homopolymer or a propylene ethylene copolymer containing 90% by weight or more preferably 95 % by weight or more; preferably 97 % by weight or more of propylene units; component A) containing 10% by weight or less preferably 8 wt% or less more preferably 6 wt% or less even more preferably 5 wt% or less of a fraction soluble in xylene at 25°C ($XS_A$), both the amount of propylene units and of the fraction $XS_A$ being referred to the weight of A);
B) 20-50% by weight; preferably 25-45% by weight; more preferably 30-40 % by weight of a copolymer of ethylene and a $C_3$-$C_8$ alpha-olefin containing from 1.0% to 20% by weight ; preferably from 5% to 15 % by weight; more preferably from 7 % to 12 % by weight of alpha-olefin units and containing 25% by weight or less; preferably from 20% by weight or less; preferably 17% by weight or less of a fraction soluble in xylene at 25°C ($XS_B$), both the

amount of alpha-olefin units and of the fraction $XS_B$ being referred to the weight of (B); and
C) 30-60% by weight; preferably 35-55% by weight; more preferably 40-50 % by weight of a copolymer of ethylene and propylene containing from 25% to 75% by weight; preferably from 37% to 65% by weight; more preferably from 45% to 58% by weight of ethylene units and containing from 40% to 95% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100.

Component (A) preferably has the melt flow rate (230°C/2.16 kg) ranging between 50 and 200 g/10 min; more preferably between 80 and 170 g/10 min.

Components (A)+ (B) blended have the melt flow rate (ISO 1133, 230 °C/2.16 kg) comprised between 0.1 and 70 g/10 min. preferably between 1 and 50 g/10 min; more preferably between 8 and 40 g/10 min.

Preferably component B) has a density (determined according to ISO 1183 at 23°C) of from 0.940 to 0.965 $g/cm^3$. Component B) is an ethylene copolymer containing $C_3$-$C_8$ alpha-olefin derived units. Specific examples of such alpha-olefin comonomers are propylene, 1-butene, 1-pentene, 4-methyl-1-pentene, 1-hexene and 1-octene; 1-butene 1-hexene and 1-octene being preferred; 1-butene being the most preferred.

Preferably the polyolefin composition has a melt flow rate (ISO 1133, 230 °C/2.16 kg) comprised between 0.5 to 25 g/10min preferably from 0.8 to 20.0g/10min; even more preferably from 1.0 to 18.0g/10min.

Preferably the polyolefin composition has an intrinsic viscosity [$\eta$] (measured in tetrahydronaphthalene at 135 °C) of the xylene soluble fraction at 25°C comprised between 1.5 to 4.0 dl/g preferably the intrinsic viscosity is comprised between 2.0 and 3.5 dl/g; more preferably the intrinsic viscosity is comprised between 2.1 and 2.8 dl/g.

For the present disclosure the term "copolymer" comprises only polymers containing two kinds of comonomers such as propylene and ethylene or ethylene and 1-butene.
The polyolefinic fiber comprising from 2 wt% to 20 wt% preferably from **3** wt% to 15 wt%; more preferably from **4** wt% to 12 wt% relative to the total weight of the fiber of the polyolefin composition shows an increased softness by keeping the values of tenacity and elongation at break substantially unchanged with respect to the fiber that do not contain the polyolefin composition. Thus, allowing to obtain soft fiber with still good mechanical characteristics.

It has been found that the polyolefin composition can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step; however, its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus, in a preferred embodiment, the polymer composition B) of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above-mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

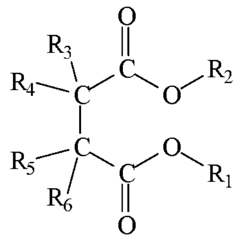

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalyst (2), one preferably uses the trialkyl aluminum compounds, such as Altriethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1_aR^2_bSi(OR^3)_c$, where a and b are integer numbers from 0 to 2, c is an integer from 1 to 3 and the sum (a+b+c) is 4; $R^1$, $R_2$ and $R_3$ are alkyl, cycloalkyl or aryl radicals with 1-18 carbon atoms optionally containing heteroatoms.

Useful examples of silicon compounds are (tert-butyl)$_2$Si(OCH$_3$)$_2$, (cyclohexyl)(methyl)Si (OCH$_3$)$_2$, (phenyl)$_2$Si(OCH$_3$)$_2$ and (cyclopentyl)$_2$Si(OCH$_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in suspension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The fiber of the present disclosure preferably comprises from 98 wt% to 80 wt%; preferably from 95 wt% to 85 wt% more preferably from 92 wt% to 88 wt% of a propylene homo or copolymer D) having a of a fraction soluble in xylene at 25°C lower than 10 wt% preferably lower than 8 wt% more preferably lower than 4 wt%, the sum of the polyolefin composition and the propylene homo or copolymer being 100 wt%. Preferably propylene homopolymer D) is used.

The propylene copolymer D) preferably contain from 0.5 wt% to 10.0 wt%, preferably from 1.0 wt% to 6.0 wt%; more preferably from 1.5 wt% to 4.5 wt% of ethylene or $C_4$-$C_8$ alpha-olefin derived units. Specific examples of such alpha-olefin comonomers are propylene, 1-butene, 1-pentene, 4-methyl-1-pentene, 1-hexene and 1-octene; ethylene, 1-butene or 1-hexene being preferred; ethylene being the most preferred.

The propylene homo or copolymer D) preferably has a melt flow rate (ISO 1133, 230 °C/2.16 kg) comprised between 7 and 50 g/10min preferably ranging from 12 to 40 g/10min; even more preferably from 15 to 30g/10min.
The following examples are given in order to illustrate, but not limit the present disclosure.

## EXAMPLES

### CHARACTERIZATIONS

**Xylene-insoluble and soluble fraction at 25°C (XS or Xs)**

2.5 g of polymer and 250 $cm^3$ of o-xylene are introduced in a glass flask equipped with a refrigerator and a magnetical stirrer. The temperature is raised in 30 minutes from room temperature up to the boiling point of the solvent (135°C). The so obtained clear solution is then kept under reflux and stirring for further 30 minutes. The closed flask is then kept in a thermostatic water bath at 25 °C for 30 minutes as well so that the crystallization of the insoluble (XI) part of the sample takes place. The so formed solid is filtered on quick filtering paper. 100 $cm^3$ of the filtered liquid is poured in a previously weighed aluminum container which is heated on a heating plate under nitrogen flow, to remove the solvent by evaporation. The container is then kept in an oven at 80 °C under vacuum to dryness and then weighed after constant weight is obtained. Thus, one calculates the percent by weight of polymer soluble and insoluble in xylene at 25 °C.
XS of components B) and C) have been calculated by using the formula;

$$XStot=WaXSA+WbXSB+WcXSC$$

wherein Wa, Wb and Wc are the relative amount of components A, B and C (A+B+C=1)

**Melt Flow Rate (MFR)**

Measured according to ISO 1133 at 230°C with a load of 2.16 kg, unless otherwise specified.

**Intrinsic viscosity IV**

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.
The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ $\eta$ ].

**Comonomer (C2 and C4) content**

Comonomer ($C_2$ and $C_4$) content

The content of comonomers was determined by infrared spectroscopy by collecting the IR spectrum of the sample vs. an air background with a Fourier Transform Infrared spectrometer (FTIR). The instrument data acquisition parameters were:

- purge time: 30 seconds minimum
- collect time: 3 minutes minimum
- apodization: Happ-Genzel
- resolution: 2 $cm^{-1}$.

*Sample Preparation* - Using a hydraulic press, a thick sheet was obtained by compression molding about g 1 of sample between two aluminum foils. A small portion was cut from this sheet to mold a film. The film thickness was set in order to have a maximum absorbance of the $CH_2$ absorption band recorded at ~720 $cm^{-1}$ of 1.3 a.u. (% Transmittance > 5%). Molding conditions were 180±10°C (356°F) and pressure was around 10 $kg/cm^2$ (142.2 PSI) for about one

minute. The pressure was then released, the sample removed from the press and cooled to room temperature. The spectrum of pressed film sample was recorded in absorbance vs. wavenumbers ($cm^{-1}$). The following measurements were used to calculate ethylene ($C_2$) and 1-butene ($C_4$) contents:

a) Area ($A_t$) of the combination absorption bands between 4482 and 3950 $cm^{-1}$ which is used for spectrometric normalization of film thickness.
b) Area ($A_{C2}$) of the absorption band due to methylenic sequences ($CH_2$ rocking vibration) in the range 660 to 790 $cm^{-1}$ after a proper digital subtraction of an isotactic polypropylene (IPP) and a $C_2C_4$ references spectrum.
c) The factor of subtraction ($FCR_{C4}$) between the spectrum of the polymer sample and the $C_2C_4$ reference spectrum The reference spectrum is obtained by digital subtraction of a linear polyethylene from a $C_2C_4$ copolymer, in order to extract the $C_4$ band (ethyl group at ~771 cm-1).

The ratio $A_{C2}$ / $A_t$ is calibrated by analysing ethylene-propylene standard copolymers of known compositions, determined by NMR spectroscopy.
The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150).
In order to calculate the ethylene ($C_2$) and 1-butene ($C_4$) content, calibration curves were obtained by using samples of known amount of ethylene and 1-butene detected by $^{13}$C-NMR.
Calibration for ethylene - A calibration curve was obtained by plotting $A_{C2}/A_t$ versus ethylene molar percent (%C2m), and the coefficient $a_{C2}$, $b_{C2}$ and $c_{C2}$ then calculated from a "linear regression".
Calibration for 1-butene - A calibration curve was obtained by plotting $FCR_{C4}/A_t$ versus butane molar percent (%$C_4$m) and the coefficients $a_{C4}$, $b_{C4}$ and $C_{C4}$ then calculated from a "linear regression".
The spectra of the unknown samples are recorded and then ($A_t$), ($A_{C2}$) and ($FCR_{C4}$) of the unknown sample are calculated.
The ethylene content (% molar fraction C2m) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction C4m) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

$a_{C4}$, $b_{C4}$, $c_{C4}$ $a_{C2}$, $b_{C2}$, $c_{C2}$ are the coefficients of the two calibrations.
Changes from mol% to wt% are calculated by using molecular weigths.
Amount (wt%) of comonomer of components A-C are calculated by using the relation:

$$Comtot=WaComA+WbComB+WcComC$$

wherein Wa, Wb and Wc are the relative amount of components A, B and C (A+B+C=1)
Comtot, ComA, ComB, ComC are the amounts of comonomer in the composition (tot) and in components A-C.

- **Titre of filaments**

From a 10 cm long roving, 50 fibers are randomly chosen and weighed. The total weight of the 50 fibers, expressed in mg, is multiplied by 2, thereby obtaining the titre in dtex.

- **Tenacity and Elongation at break of filaments**

From a 500 m roving a 100 mm-long segment is cut and single fibers randomly chosen. Each single fiber is fixed to the clamps of a Dynamometer and tensioned to break with a traction speed of 20 mm/min for elongations lower than 100% and 50 mm/min for elongations greater than 100%, the initial distance between the clamps being of 20 mm. The ultimate strength (load at break) and the elongation at break are determined in machine (MD) direction.
The tenacity is calculated by way of the following equation:

$$\text{Tenacity} = \text{Ultimate strength (cN) x 10/Titre (dtex)}.$$

**Maximum spinning speed**

The maximum spinning speed gives indication of the spinnability of the propylene polymer composition of the invention. The value corresponds to the highest spinning rate that can be maintained for 30 minutes with no filament break

**Softness**

Softness index is a conventional measure of flexibility of fibers, calculated as weight [1/g] of a bundle, whose length is determined in standard conditions. Softness values, so obtained, are in excellent agreement with the results of the empirical tests on non-woven. The apparatuses used for such analysis are the following:

- Twist measuring device (Torcimetro by Negri e Bossi Spa)
- Analytical balance (by Mettler)
- Softness tester (by Clark).

The sample is prepared by providing a fiber bundle of about 4,000 dtex in linear density and 0.6 m in length. The ends of the bundle are fixed on the clamps of the twist measuring device and a 120 leftward twist runs is applied. The twisted bundle is taken off from the device (carefully avoiding any untwisting). The two ends of the twisted bundle are taken in the same side and the halves winded around each other until the bundle assumes the stable form of a cord. Three specimens of each test at least are prepared. The bundle is bended in two and the ends fixed between the rolls of the Clark softness tester, leaving a distance of 1 cm between the two halves. The plane of the device is rotated rightward and stopped, when the bundle reverses its bending direction, taking note of the rotation angle (a). Subsequently the plane rotated leftward and again stopped, when the bundle reverses its bending side. Take note of the rotation angle (b). The height of the bundle above the two rolls is adjusted so to have the sum a ± b equal to 90° +/- 1° and this height is measured with a proper device (sensitivity 1 mm). Each of the two angles, a and b, should not exceed the limits of 45° +/- 15°. The bundle is taken off from the device and cut to an height corresponding to that previously measured. The cut bundle is weighed by an analytical balance with a precision of 0.1 mg. The Softness index can be calculated from: S.I. = (1/W) * 100, in which W is the weight, in grams, of the cut bundle. The final result is the average of the 3 samples. The sensitivity in measuring the bundle weight is 0.1 mg

**Examples 1 - Preparation of polyolefin composition**

Catalyst precursor

The solid catalyst component used in polymerization is a Ziegler-Natta catalyst component supported on magnesium chloride, containing titanium and diisobutylphthalate as internal donor, prepared as follows. An initial amount of microspheroidal MgCl2·2. 8C2H5OH was prepared according to the method described in Example 2 of USP 4,399,054 but operating at 3,000 rpm instead of 10,000. The so obtained adduct was then subject to thermal dealcoholation at increasing temperatures from 30 to 130°C operating in nitrogen current until the molar alcohol content per mol of Mg is 1.16. Into a 1000 mL four-necked round flask, purged with nitrogen, 500 mL of TiCl4 were introduced at 0°C. While stirring, 30 grams of the microspheroidal MgCl2·1.16C2H5OH adduct (prepared as described above) were added. The temperature was raised to 120°C and kept at this value for 60 minutes. During the temperature increase, an amount of diisobutylphthalate was added such as to have a Mg/ diisobutylphthalate molar ratio of 18. After the mentioned 60 minutes, the stirring was stopped, the liquid siphoned off and the treatment with TiCl4 was repeated at 100°C for 1 hour in the presence of an amount of diisobutylphthalate such as to have a Mg/ diisobutylphthalate molar ratio of 27. After that time the stirring was stopped, the liquid siphoned off and the treatment with TiCl4 was repeated at 100°C for 30

min. After sedimentation and siphoning at 85°C the solid was washed six times with anhydrous hexane (6 x 100 ml) at 60 °C.

Catalyst system and prepolymerization

Before introducing it into the polymerization reactors, the solid catalyst component described above is contacted at 30 °C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio be equal to 4.
The catalyst system is then subjected to prepolymerization by maintaining it in suspension in liquid propylene at 50 °C for about 75 minutes before introducing it into the first polymerization reactor.

Polymerization

The polymerization is carried out in continuous in a series of three gas-phase reactors equipped with devices to transfer the product from the first reactor to the second one. Into the first gas phase polymerization reactor a propylene-based polymer (A) is produced by feeding in a continuous and constant flow the prepolymerized catalyst system, hydrogen (used as molecular weight regulator) and propylene all in the gas state. The propylene-based polymer (A) coming from the first reactor is discharged in a continuous flow and, after having been purged of unreacted monomers, is introduced, in a continuous flow, into the second gas phase reactor, together with quantitatively constant flows of hydrogen and ethylene, all in the gas state. In the second reactor a copolymer of ethylene (B) is produced. The product coming from the second reactor is discharged in a continuous flow and, after having been purged of unreacted monomers, is introduced, in a continuous flow, into the third gas phase reactor, together with quantitatively constant flows of hydrogen, ethylene and propylene all in the gas state. In the third reactor an ethylene-propylene polymer (C) is produced. Polymerization conditions, molar ratio of the reactants and composition of the copolymers obtained are shown in Table 1. The polymer particles exiting the third reactor are subjected to a steam treatment to remove the reactive monomers and volatile substances, and then dried. Thereafter the polymer particles are mixed with a usual stabilizing additive composition in a twin-screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition is made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition.
The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite. The characteristics relating to the polymer composition, reported in Table 2, are obtained from measurements carried out on the so extruded polymer, which constitutes the stabilized ethylene polymer composition according to the exemplary embodiments disclosed herein.

Table 1 - Polymerization conditions

| Example | | 1 |
|---|---|---|
| 1st Reactor - component (A) | | |
| Temperature | °C | 60 |
| Pressure | barg | 16 |
| $H_2/C_3$- | mol. | 0.24 |
| Split | wt% | 22 |
| Xylene soluble of (A) (XSa) | wt% | 4.2 |

(continued)

| Example | | 1 |
|---|---|---|
| 1st Reactor - component (A) | | |
| MFR of (A) | g/10 min. | 110 |
| 2nd Reactor - component (B) | | |
| Temperature | °C | 80 |
| Pressure | barg | 18 |
| $H_2/C_2$- | mol. | 0.81 |
| $C_4$-/($C_2$- + $C_4$-) | mol. | 0.25 |
| $C_2$-/($C_2$- + $C_3$-) | mol. | 0.98 |
| Split | wt% | 32 |
| $C_2$- content of B * | wt% | 90 |
| $C_4$- content of B * | wt% | 10 |
| Xylene soluble of B ($XS_B$) * | wt% | 16.0 |
| Xylene soluble of (A + B) | wt% | 12.0 |
| MFR of (A + B) | g/10 min. | 35.9 |
| 3rd Reactor - component (C) | | |
| Temperature | °C | 65 |
| Pressure | barg | 18 |
| $H_2/C_2$- | mol. | 0.17 |
| $C_2$-/($C_2$- + $C_3$-) | mol. | 0.42 |
| Split | wt% | 46 |
| $C_2$- content of C * | wt% | 52 |
| Xylene soluble of (C) (XSc)* | wt% | 83 |
| Notes: C2- = ethylene (IR); C3- = propylene (IR); C4- = 1-butene (IR); split = amount of polymer produced in the concerned reactor. * Calculated values. | | |

The features of the polymer of example 1 are reported on table 2

Table 2

| Example | | 1 |
|---|---|---|
| component A | | |
| C2 content | wt% | 0 |
| XSA | wt% | 4.2 |
| MFR | g/10 min | 110 |
| split | wt% | 22 |
| component B | | |
| XSB* | wt% | 16 |
| C2 content* | wt% | 90.0 |
| C4 content* | wt% | 10.0 |
| split | wt% | 32 |

(continued)

| | | |
|---|---|---|
| component B | | |
| MFR of (A + B) | g/10 min | 35.9 |
| Component C | | |
| XSC* | wt% | 83 |
| C2 content* | wt% | 52 |
| split | wt% | 446 |
| total composition | | |
| MFR | g/10 min | 1.61 |
| IV on soluble in Xylene | dl/g | 2.4 |
| C2 ethylene ; C4 1-butene;<br>* calculated | | |

**Propylene homopolymer D).**

D1 is a propylene homopolymer, commercial grade sold by Lyondellbasell used in the production of continuous filament having a MFR of 25 g/10 min and a xylene soluble fraction at 25°C lower than 10 wt%
D2 is a propylene homopolymer, commercial grade sold by Lyondellbasell used in the production of continuous filament having a MFR of 18 g/10 min and a xylene soluble fraction at 25°C lower than 10 wt.%

**Preparation of the fibers**

blends of the polyolefin composition prepared in example 1 and component D1 or D2 have been prepared. After extrusion the polymers are spun in a Leonard 25 spinning pilot line with screw LID ratio of 25, screw diameter of 25 mm and compression ratio of 1:3. The line is marketed by Costruzioni Meccaniche Leonard-Sumirago (VA). The operative spinning conditions are here reported.

Operative conditions:

- Hole diameter: mm 0.6
- Output per hole: g/min 0.6
- Hole number in the die: 37
- Die temperature (°C): 250
- Melt temperature (°C): 258.

The properties of the filaments are reported on Table 3.

Table 3

| | | | | | |
|---|---|---|---|---|---|
| | | Fiber 1 | Fiber 2 | Fiber 3 | Fiber 4 |
| Component D | Wt% | D1 100 | D1 95 | D2 100 | D2 90 |
| Polyolefin composition | Wt% | 0 | 5 | 0 | 10 |
| MFR fiber | g/10 min | 29.4 | 27.0 | 23.3 | 17.5 |
| Max spinning speed | m/min | 4500 | 3900 | 4500 | 3900 |

(continued)

| | | Fiber 1 | Fiber 2 | Fiber 3 | Fiber 4 |
|---|---|---|---|---|---|
| Titre | dTex | 2.20 | 2.25 | 2.15 | 2.15 |
| Tenacity | cN/Tex | 27.5 | 27.3 | 27.3 | 30.3 |
| Elongation at break | % | 260 | 290 | 300 | 300 |
| Softness | | 870 | 970 | 840 | 920 |

From Table 3 clearly results that fiber 2 and 4 have an increasing in softness while keeping elongation and tenacity substantially unchanged.

## Claims

**1.** Polyolefin fiber comprising from 2wt% to 20 wt% relative to the total weight of the fiber of a polyolefin composition comprising:

A) 5-35% by weight of a propylene homopolymer or a propylene ethylene copolymer containing 90% by weight or more of propylene units; component A) containing 10% by weight or less of a fraction soluble in xylene at 25°C ($XS_A$), both the amount of propylene units and of the fraction $XS_A$ being referred to the weight of A);
B) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C ($XS_B$), both the amount of alpha-olefin units and of the fraction $XS_B$ being referred to the weight of (B); and
C) 30-60% by weight of a copolymer of ethylene and propylene containing from 25% to 75% by weight of ethylene units and containing from 40% to 95% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100.

**2.** The Polyolefin fiber according to claim 1 comprising from 5wt% to 15 wt% of the polyolefin composition.

**3.** The Polyolefin fiber according to claims 1 or 2 further comprising from 98 wt% to 80 wt%; of a propylene homo or copolymer D) having a of a fraction soluble in xylene at 25°C lower than 10 wt% the sum of the polyolefin composition and the propylene homo or copolymer being 100 wt%.

**4.** The Polyolefin fiber according to anyone of claims 1-3 wherein component D) is a propylene homopolymer or a propylene copolymer containing from 0.5 wt% to 10 wt%, of ethylene or $C_4$-$C_8$ alpha-olefin derived units.

**5.** The Polyolefin fiber according to anyone of claims 1-4 wherein component D) is a propylene homopolymer.

**6.** The Polyolefin fiber according to anyone of claims 1-5 wherein component A) is a polypropylene homopolymer

**7.** The Polyolefin fiber according to anyone of claims 1-6 wherein component B) is a copolymer of ethylene and a $C_3$-$C_8$ alpha-olefin containing from 5% to 15 % by weight of alpha-olefin units.

**8.** The Polyolefin fiber according to anyone of claims 1-7 wherein component C) is a copolymer of ethylene and propylene containing from 37% to 65% by weight of ethylene units.

**9.** The Polyolefin fiber according to anyone of claims 1-8 wherein component (A) has the melt flow rate (ISO 1133, 230 °C/2.16 kg) ranging between 50 and 200 g/10 min;

**10.** The Polyolefin fiber according to anyone of claims 1-9 wherein component (B) has the melt flow rate (ISO 1133, 230 °C/2.16 kg) ranging between 0.1 and 70 g/10 min;

**11.** The Polyolefin fiber according to anyone of claims 1-01 wherein the polyolefin composition has a melt flow rate (ISO

1133, 230 °C/2.16 kg) comprised between 0.5 to 25 g/10m;

**12.** The Polyolefin fiber according to anyone of claims 1-11 wherein component D) has a melt flow rate (ISO 1133, 230 °C/2.16 kg) comprised between 7 to 50 g/10min.

**13.** The Polyolefin fiber according to anyone of claims 1-12 wherein component D) has a melt flow rate (ISO 1133, 230 °C/2.16 kg)comprised between 12 to 40 g/10min.

**14.** The Polyolefin fiber according to anyone of claims 1-13 wherein component D) is a propylene ethylene copolymer.

**15.** The Polyolefin fiber according to anyone of claims 1-13 wherein component D) is a propylene copolymer containing from 1.0 wt% to 6.0 wt%; of ethylene or $C_4$-$C_8$ alpha-olefin derived units.

## Patentansprüche

**1.** Polyolefinfaser, umfassend 2 Gew.% bis 20 Gew.%, bezogen auf das Gesamtgewicht der Faser, von einer Polyolefinzusammensetzung, umfassend:

(A) 5 bis 35 Gew.% von einem Propylenhomopolymer oder Propylen-Ethylen-Copolymer, das 90 Gew.% oder mehr Propyleneinheiten enthält; wobei Komponente A) 10 Gew.% oder weniger von einer in Xylol bei 25 °C löslichen Fraktion ($XS_A$) enthält, wobei sich sowohl die Menge der Propyleneinheiten als auch diejenige der Fraktion $XS_A$ auf das Gewicht von A) beziehen;
B) 20 bis 50 Gew.% eines Copolymers von Ethylen und einem $C_3$-$C_8$-alpha-Olefin, das 0,1 Gew.% bis 20 Gew.% alpha-Olefineinheiten enthält und 25 Gew.% oder weniger von einer in Xylol bei 25 °C löslichen Fraktion ($XS_B$) enthält, wobei sich sowohl die Menge der alpha-Olefineinheiten als auch diejenige der Fraktion $XS_B$ auf das Gewicht von (B) beziehen; und
(C) 30 bis 60 Gew.% eines Copolymers von Ethylen und Propylen, das 25 Gew.% bis 75 Gew.% Ethyleneinheiten enthält und 40 Gew.% bis 95 Gew.% von einer in Xylol bei 25 °C löslichen Fraktion (XSc) enthält, wobei sich sowohl die Menge der Ethyleneinheiten als auch diejenige der Fraktion XSc auf das Gewicht von (C) beziehen;

wobei die Mengen von (A), (B) und (C) sich auf das Gesamtgewicht von (A) + (B) + (C) beziehen, wobei die Summe der Mengen von (A), (B) und (C) 100 ergibt.

**2.** Polyolefinfaser nach Anspruch 1, umfassend 5 Gew.% bis 15 Gew.% der Polyolefinzusammensetzung.

**3.** Polyolefinfaser nach den Ansprüchen 1 oder 2, des Weiteren umfassend 98 Gew.% bis 80 Gew.% eines Propylenhomo- oder -copolymers D) mit einer in Xylol bei 25 °C löslichen Fraktion kleiner als 10 Gew.%, wobei die Summe der Polyolefinzusammensetzung und des Propylenhomo- oder -copolymers 100 Gew.% beträgt.

**4.** Polyolefinfaser nach einem der Ansprüche 1 bis 3, wobei Komponente D) ein Propylenhomopolymer oder ein Propylencopolymer ist, das 0,5 Gew.% bis 10 Gew.% von Ethylen oder $C_4$-$C_8$-alpha-Olefin abgeleitete Einheiten enthält.

**5.** Polyolefinfaser nach einem der Ansprüche 1 bis 4, wobei Komponente D) ein Propylenhomopolymer ist.

**6.** Polyolefinfaser nach einem der Ansprüche 1 bis 5, wobei Komponente A) ein Propylenhomopolymer ist.

**7.** Polyolefinfaser nach einem der Ansprüche 1 bis 6, wobei Komponente B) ein Copolymer von Ethylen und einem $C_3$-$C_8$-alpha-Olefin ist, das 5 Gew.% bis 15 Gew.% alpha-Olefineinheiten enthält.

**8.** Polyolefinfaser nach einem der Ansprüche 1 bis 7, wobei Komponente C) ein Copolymer von Ethylen und Propylen ist, das 37 Gew.% bis 65 Gew.% Ethyleneinheiten umfasst.

**9.** Polyolefinfaser nach einem der Ansprüche 1 bis 8, wobei Komponente (A) eine Schmelzflussrate (ISO 1133, 230 °C/2,16 kg) im Bereich zwischen 50 und 200 g/10 min aufweist.

**10.** Polyolefinfaser nach einem der Ansprüche 1 bis 9, wobei Komponente (B) eine Schmelzflussrate (ISO 1133, 230

°C/2,16 kg) im Bereich zwischen 0,1 und 70 g/10 min aufweist.

**11.** Polyolefinfaser nach einem der Ansprüche 1 bis 10, wobei die Polyolefinzusammensetzung eine Schmelzflussrate (ISO 1133, 230 °C/2,16 kg) zwischen 0,5 bis 25 g/10 min aufweist.

**12.** Polyolefinfaser nach einem der Ansprüche 1 bis 11, wobei Komponente D) eine Schmelzflussrate (ISO 1133, 230 °C/2,16 kg) im Bereich zwischen 7 und 50 g/10 min aufweist.

**13.** Polyolefinfaser nach einem der Ansprüche 1 bis 12, wobei Komponente D) eine Schmelzflussrate (ISO 1133, 230 °C/2,16 kg) im Bereich zwischen 12 und 40 g/10 min aufweist.

**14.** Polyolefinfaser nach einem der Ansprüche 1 bis 13, wobei Komponente D) ein Propylen-Ethylen-Copolymer ist.

**15.** Polyolefinfaser nach einem der Ansprüche 1 bis 13, wobei Komponente D) ein Propylencopolymer ist, das 1,0 Gew.% bis 6,0 Gew.% von Ethylen oder $C_4$-$C_8$-alpha-Olefin abgeleitete Einheiten enthält.

## Revendications

**1.** Fibre polyoléfinique comprenant 2 % en poids à 20 % en poids, par rapport au poids total de la fibre, d'une composition polyoléfinique comprenant :

A) 5 à 35 % en poids d'un homopolymère de propylène ou d'un copolymère de propylène-éthylène contenant 90 % en poids ou plus de motifs de propylène ; le constituant A) contenant 10 % en poids ou moins d'une fraction soluble dans le xylène à 25 °C ($XS_A$), à la fois la quantité de motifs de propylène et de la fraction $XS_A$ se rapportant au poids de A) ;
B) 20 à 50 % en poids d'un copolymère d'éthylène et d'une alpha-oléfine en $C_3$-$C_8$ contenant 0,1 % à 20 % en poids de motifs d'alpha-oléfine et contenant 25 % en poids ou moins d'une fraction soluble dans le xylène à 25 °C ($XS_B$), à la fois la quantité de motifs d'alpha-oléfine et de la fraction $XS_B$ se rapportant au poids de (B) ; et
C) 30 à 60 % en poids d'un copolymère d'éthylène et de propylène contenant 25 % à 75 % en poids de motifs d'éthylène et contenant 40 % à 95 % en poids d'une fraction soluble dans le xylène à 25 °C (XSc), à la fois la quantité de motifs d'éthylène et de la fraction XSc se rapportant au poids de (C) ;

les quantités de (A), (B) et (C) se rapportant au poids total de (A) + (B) + (C), la somme des quantités (A) + (B) + (C) valant 100.

**2.** Fibre polyoléfinique selon la revendication 1, comprenant 5 % en poids à 15 % en poids de la composition polyoléfinique.

**3.** Fibre polyoléfinique selon les revendications 1 ou 2, comprenant en outre 98% en poids à 80 % en poids d'un homopolymère ou d'un copolymère de propylène D) présentant une fraction soluble dans le xylène à 25 °C inférieure à 10 % en poids, la somme de la composition polyoléfinique et de l'homopolymère ou du copolymère de propylène valant 100 % en poids.

**4.** Fibre polyoléfinique selon l'une quelconque des revendications 1 à 3, le constituant D) étant un homopolymère de propylène ou un copolymère de propylène contenant 0,5 % en poids à 10 % en poids de motifs d'éthylène ou de motifs dérivés d'alpha-oléfine en $C_4$-$C_8$.

**5.** Fibre polyoléfinique selon l'une quelconque des revendications 1 à 4, le constituant D) étant un homopolymère de propylène.

**6.** Fibre polyoléfinique selon l'une quelconque des revendications 1 à 5, le constituant A) étant un homopolymère de polypropylène.

**7.** Fibre polyoléfinique selon l'une quelconque des revendications 1 à 6, le constituant B) étant un copolymère d'éthylène et d'une alpha-oléfine en $C_3$-$C_8$ contenant 5 % à 15 % en poids de motifs d'alpha-oléfine.

**8.** Fibre polyoléfinique selon l'une quelconque des revendications 1 à 7, le constituant C) étant un copolymère d'éthylène

et de propylène contenant 37 % à 65 % en poids de motifs d'éthylène.

**9.** Fibre polyoléfinique selon l'une quelconque des revendications 1 à 8, le constituant (A) présentant un indice de fluidité à chaud (ISO 1133, 230 °C/2,16 kg) situé dans la plage entre 50 et 200 g/10 min.

**10.** Fibre polyoléfinique selon l'une quelconque des revendications 1 à 9, le constituant (B) présentant un indice de fluidité à chaud (ISO 1133, 230 °C/2,16 kg) situé dans la plage entre 0,1 et 70 g/10 min.

**11.** Fibre polyoléfinique selon l'une quelconque des revendications 1 à 10, la composition polyoléfinique présentant un indice de fluidité à chaud (ISO 1133, 230 °C/2,16 kg) compris entre 0,5 et 25 g/10 min.

**12.** Fibre polyoléfinique selon l'une quelconque des revendications 1 à 11, le constituant D) présentant un indice de fluidité à chaud (ISO 1133, 230 °C/2,16 kg) compris entre 7 et 50 g/10 min.

**13.** Fibre polyoléfinique selon l'une quelconque des revendications 1 à 12, le constituant D) présentant un indice de fluidité à chaud (ISO 1133, 230 °C/2,16 kg) compris entre 12 et 40 g/10 min.

**14.** Fibre polyoléfinique selon l'une quelconque des revendications 1 à 13, le constituant D) étant un copolymère de propylène-éthylène.

**15.** Fibre polyoléfinique selon l'une quelconque des revendications 1 à 13, le constituant D) étant un copolymère de propylène contenant 1,0 % en poids à 6,0 % en poids de motifs d'éthylène ou de motifs dérivés d'alpha-oléfine en $C_4$-$C_8$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 94009193 A
- US 4399054 A
- EP 45977 A
- EP 361493 A
- EP 728769 A


### Non-patent literature cited in the description


- **HUGGINS, M.L.** *J. Am. Chem. Soc.,* 1942, vol. 64, 2716
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150